Europäisches Patentamt

(19) European Patent Office

Office européen des brevets

(11) Publication number: **0 252 058**
**A2**

(12) **EUROPEAN PATENT APPLICATION**

(21) Application number: **87870086.3**

(22) Date of filing: **18.06.87**

(51) Int. Cl.⁴: **H 04 N 5/76**
**// H04N7/10**

(30) Priority: **23.06.86 US 877349**

(43) Date of publication of application:
**07.01.88 Bulletin 88/01**

(84) Designated Contracting States:
**BE CH DE ES FR GB IT LI NL SE**

(71) Applicant: **GENERAL INSTRUMENT CORPORATION**
**767 Fifth Avenue**
**New York New York 10153 (US)**

(72) Inventor: **Wachob, David E.**
**8379 Glen Road**
**Elkins Park Pennsylvania 19117 (US)**

(74) Representative: **Vanderperre, Robert et ai**
**Bureau VANDER HAEGHEN 63 Avenue de la Toison d'Or**
**B-1060 Bruxelles (BE)**

(54) **A VCR interface for receiving cable tv signals.**

㊷ A novel VCR interface for use with scrambled cable TV signals includes a conventional splitter, band reject filter and combiner. The VCR interface is configured so that the signal channels normally made unavailable by the cable TV converter/ descrambler are recombined and presented to the VCR RF input allowing for simultaneous viewing and recording of different signal channels without the need of extra converter/ descramblers or RF switching devices.

EP 0 252 058 A2

**Description**

## A VCR INTERFACE FOR RECEIVING CABLE TV SIGNALS

This invention relates to VCR devices for receiving incoming TV signals, and more particularly, to VCR interfaces receiving scrambled premium channel signals from a cable TV drop.

Video cassette recorders (VCR) are well-known consumer electronics items. These devices are configured to receive television signals in a conventional fashion from an antenna or cable TV drop. Signals from the VCR are subsequently presented to a TV for viewing. VCR's typically comprise an internal tuner and video cassette record/playback means. For increased flexibility, VCR's are switchable such that the incoming TV signal can be shunted past the VCR and presented to the TV.

VCR's feature several different modes of operation. With a VCR, an operator can record an incoming program on a video cassette and simultaneously monitor the program on the TV. Alternatively, a program already recorded on a video cassette can be viewed directly in place of incoming TV signals.

VCR's possess a switch (VCR/TV) which enables the operator to view either incoming TV signals or signals from the VCR. In the TV position, the viewer simply selects the channel using the television's own internal tuner in a conventional fashion. The VCR still receives signals from the TV antenna or cable drop, so a programm can be recorded simultaneously on the video cassette from a channel selected with the VCR tuner.

Cable TV companies now offer at an additional cost one or more premium channels in a scrambled mode, requiring a converter/descrambler for proper viewing. In operation, the viewer selects a single input channel which is descrambled as needed. These signals are subsequently presented either to the VCR or the TV directly, using a tuner internal to the converter/descrambler. This single channel output from the converter/descrambler seriously limits the flexibility of the VCR because the operator cannot record a channel different from one that is being provided from the converter/descrambler.

The prior art contains several converter/descrambler-RF switch configurations which overcome this problem. However, these designs usually involve one or more additional converter/descramblers with an external RF switch and RF splitter. The prior art devices required to simultaneously view and record two different channels are burdened by additional cost and complexity over the already cumbersome converter/descrambler VCR installation.

An object of the present invention is to provide an apparatus to interface multiple signal channel RF input signals, and signals output from a cable TV converter/descrambler (on a predefined single channel), to a VCR to enable simultaneous recording and viewing of programs on different channels.

According to the present invention, a VCR interface which receives a multiple signal channel RF input signal and further receives, from a cable TV converter/descrambler, signals on a predefined output channel, includes a signal divider ("signal splitter") which receives and divides the input signal providing first and second divided signals, each of which have all of the signal channels of the input signal. The first divided signal is presented to the converter/descrambler. A band reject filter receives the second divided signal and removes therefrom the predefined converter/descrambler output channel. Also included is a combiner means for receiving a band reject filter signal and the converter/descrambler output signal, combining the received signals for presentation to a VCR.

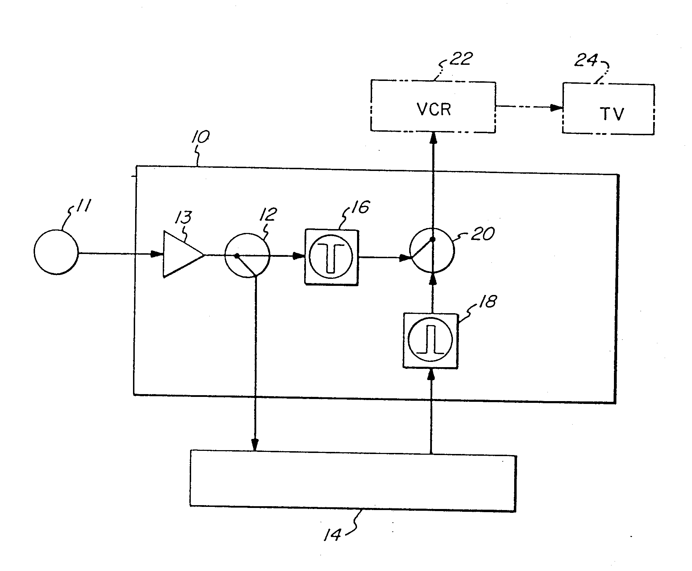

The Figure appended hereto is an expanded block diagram illustrating a VCR interface provided according to the present invention.

Referring now to the Figure, there is illustrated a VCR interface 10 which receives radio frequency (RF) TV signals at input terminal 11. An optional RF amplifier 13 can be provided to amplify the incoming broadband RF input signal. Typically, the RF input is from a conventional cable TV drop between 50 and 550 MHz. The input signal carries a plurality of television channels, each with a channel width of approximately 6 MHz.The input signal is further characterized by one or more premium channels which are scrambled by techniques known in the art. The scrambling of the signal channels prevents normal viewing with a conventional TV or proper recording with a VCR.

The VCR interface includes radio frequency signal splitter 12, typically a directional coupler configured as a power tap splitter, which receives the RF input signals and provides two signals therefrom. The frequency characteristics of both first and second divided signals provided from the splitter are unchanged from the RF input signal. All the signal channels including the scrambled premium channels are present.

The first divided signal is provided to a conventional cable TV converter/descrambler 14. These devices are well known in the art. Typically, a converter/descrambler is comprised of a conventional RF tuner for selecting one of the signal channels presented thereto. The tuner (not shown) may be selectable by either manual or electronic means. The selected TV channel is presented to a conventional descrambler, also not shown, which descrambles the television signal on that channel, if required.

The signal output from the converter/descrambler is modulated on a pre-defined single channel, typically channel 2, 3 or 4. For example, when used alone with a television set, the tuner in the television is set to receive channels 2, 3 or 4, and channel selection from the incoming TV signal is accomplished using the tuner in the converter/descrambler.

The second divided signal from the signal splitter isprovided to band reject filter 16 having a bandwidth of one TV channel (6 MHz) approximately centered at the selected signal channel output of the converter/descrambler (channel 2, 3 or 4). The band reject filter may be of a type well known in the art and should possess a minimum of approximately 60 dB signal rejection.

The converter/descrambler output signal (centered at channel 2/3/4) is provided to the VCR interface at bandpass filter 18 which has a pass band of approximately one channel wide (6 MHz) that is selected to be the same as the channel removed by band reject filter 16.

Signal combiner 20 receives the bandpass filter output signal as well as the signals output from the band reject filter, and recombines them in a conventional fashion. The recombined signal is presented to VCR 22, with the output signals from the VCR received by conventional TV set 24. The VCR and television are configured in a well known fashion, usually in accordance with the VCR manufacturer's instructions.

A VCR interface provided according to the present invention allows the TV subscriber to watch and record separate channels simultaneously in all configurations, independent of the presence or absence of scrambled TV signals. The well known limiting effects of the converter/descrambler are eliminated without extraneous converter/descramblers or RF switches. Those skilled in the art will note that the recombined signal presented to the VCR contains the full spectrum of TV channels which comprise the RF input signal, but now includes descrambled premium channel signals.

With the VCR tuned to the selected channel (2, 3 or 4), all channels can be viewed or recorded, including a premium channel. If the subscriber wishes to view a channel other than the one being recorded he can do so by switching the VCR to the "TV" mode on the "TV/VCR" switch, as was previously possible before the introduction of the converter/descrambler.

The other operational modes of the VCR are unaffected by a VCR interface provided according to the present invention. The subscriber can view a premium channel and simultaneously record a basic (or "clear") channel, watch a basic channel and record a premium channel, as well as watch a basic channel and record another basic channel simultaneously. The subscriber can record a channel selected with the internal VCR tuner, monitor the recorded program or view a different channel by proper selection of the "TV/VCR" switch and the TV tuner. Note also that the subscriber is now able to program his VCR to record from different channels. All of these operational modes can be accomplished without any external switching.

It is instructive to compare the procedures and apparatus needed to operate the VCR in the modes described hereinabove with prior art configurations. In order to watch a premium channel and record a basic channel prior to the present invention, the VCR had to receive the signal from the cable TV drop and be put in the "TV mode". Signals from the VCR would then be presented to the converter and subsequently to the television set.

In order to record a premium television channel, however, the VCR and converter/descrambler had to be disconnected and reconfigured such that the converter received signals from the cable TV drop with the VCR then receiving the output signal of the converter/descrambler. Unfortunately with this configuration, a viewer could only record the same channel as was being watched.

To view a basic channel and record a different basic channel with prior art configurations, the converter must be disconnected entirely. Moreover, VCR event programming is limited to only one descrambled TV channel. Watching a basic TV channel and recording a premium TV channel requires an additional means for splitting the input signal from the cable TV drop, with one signal path directly to the TV, while signals on the second signal path are presented to the converter/descrambler and subsequently to the VCR to be recorded. All of these complicated configurations and wiring changes are eliminated by the use of a VCR interface provided according to the present invention.

Those skilled in the art will note that it may be advantageous to delete band pass filter 18 from the VCR interface, as many cable TV converters/descramblers already possess some appropriate band pass filtering means. Moreover, those skilled in the art will also note that it is possible to combine the VCR interface and converter/descramblers to provide an interface/descrambler which would perform all the functions of a VCR interface and converter/descrambler as noted hereinabove, but would be contained in a single compact unit.

Those skilled in the art will also note that a cable television system may be configured to provide signals wherein a preselected signal channel (e.g., channel 2, 3 or 4) is left blank.

Converter/descramblers used with such a cable TV system would be comprised so that signals output therefrom are provided on the preselected channel. As a result, a VCR interface in accordance with the present invention and used with such a system can be provided without a notch filtering means, further simplifying construction and reducing cost.

Similarly, although the invention has been described with respect to a best mode embodiment thereof, those skilled in the art will note that additions, deletions or substitutions thereto can be made consistent with the spirit and scope of the invention.

## Claims

1. A VCR interface for enabling the simultaneous viewing and recording of different channels on a cable television system having scrambled and unscrambled channels, said interface comprising :

signal splitter means for splitting a broadband RF input signal into first and second signals each containing a plurality of signal channels and each having substantially identical frequency characteristics;

means for coupling said first signal to the input of a converter/descrambler of the type that produces an output signal on a predetermined channel;

band reject filter means, coupled to receive said second signal, for removing said predetermined channel from the second signal;

combiner means having a first input coupled to the output of said band reject filter means and a second input coupled to receive the output of said converter/descrambler, for combining the signals present at said first and second inputs to produce a combined output signal; and

means for coupling said combined output signal to a VCR.

2. The VCR interface of Claim 1 further comprising passband filter means receiving the converter/descrambler output signal and providing to said combiner means signals limited to the converter/descrambler predetermined channel.

3. A VCR interface/converter for enabling the simultaneous viewing and recording of different channels on a cable television system having scrambled and unscrambled channels, said interface/converter comprising :

signal splitter means for splitting a broadband RF input signal into first and second signals each containing a plurality of signal channels and each having substantially identical frequency characteristics:

converter/descrambler means receiving said first signal at an input thereof, for selecting one of said signal channels and selectably providing descrambling thereto, said converter/descrambler providing signals from said selected signal channel on a predetermined channel at an output thereof;

band reject filter means, coupled to receive said second signal, for removing said predetermined channel from the second signal;

combiner means, having a first input coupled to the output of said band reject filter means and a second input coupled to receive said converter/descrambler output signals, for combining the signals present at said first and second inputs to produce a combined output signal; and

means for coupling said combined output signal to a VCR.

4. The VCR interface/converter of Claim 3 further comprising bandpass filter means receiving said converter/descrambler output signal, for providing to said combiner means signals limited to the converter/descrambler predetermined signal channel.

5. A VCR interface for enabling the simultaneous viewing and recording of different channels on a cable television system having scrambled and unscrambled channels, wherein one of the channels is predetermined to be blank, said interface comprising :

signal splitter means for splitting a broadband RF input signal into first and second signals each containing a plurality of signal channels and each having substantially identical frequency characteristics;

means for coupling said first signal to the input of a converter/descrambler of the type that produces an output signal on the predetermined blank channel;

combiner means having a first input coupled to an output of said signal splitter means and a second input coupled to receive the output of said converter/descrambler, for combining the signals present at said first and second inputs to produce a combined output signal; and

means for coupling said combined output signal to a VCR.

6. The VCR interface of Claim 5 further comprising passband filter means receiving the converter/descrambler output signal and providing to said combiner means signals limited to the converter/descrambler predetermined channel.

0252058